# EUROPEAN PATENT APPLICATION

(11) **EP 2 546 772 A1**
(43) Date of publication of application: **16.01.2013**
(21) Application number: 10847339.8
(22) Date of filing: 10.03.2010
(51) Int. Cl.: G06F 21/20, G06F 9/50, G06T 7/00

(54) **LOAD BALANCING DEVICE FOR BIOMETRIC AUTHENTICATION SYSTEM**

(71) Applicant: Fujitsu Limited, Kawasaki-shi, Kanagawa 211-8588 (JP)
(72) Inventor: TAKAGI, Junji, Kawasaki-shi Kanagawa 211-8588 (JP)
(74) Representative: HOFFMANN EITLE
(86) International application number: PCT/JP2010/001719
(87) International publication number: WO 2011/111104

(57) **Abstract**

A load balancing device is provided that allocates, to one of a plurality of authentication servers, biometric authentication requests of users received from client terminals by comparing input biometric authentication data and registration target biometric authentication data so as to estimate a check process time, including storing a process time for an authentication request being processed for each of the authentication servers, and allocating a process for a biometric authentication request from the client terminal to an authentication server having a process time that is short by estimating a check process time on the basis of a quality of the input biometric data and a quality of registration target biometric data and referring to the process time stored in the storage unit for each authentication server when the biometric authentication request has been received from the client terminal.

## Description

### Technical Field

The embodiments described herein are related to a client-server biometric authentication system, and particularly to a load balancing device that uses a load balancing method so as to allocate, to a plurality of servers, processes of authentication requests from client terminals.

### Background Art

Client-Server biometric authentication systems employ a load balancing method for allocating processes to a plurality of authentication servers in response to authentication requests from client terminals. According to this load balancing method, when a plurality of client terminals have transmitted authentication requests, the process amount and the data amount are equalized over a plurality of servers, and the processing requests are allocated in such a manner that loads will not concentrate on a particular server.

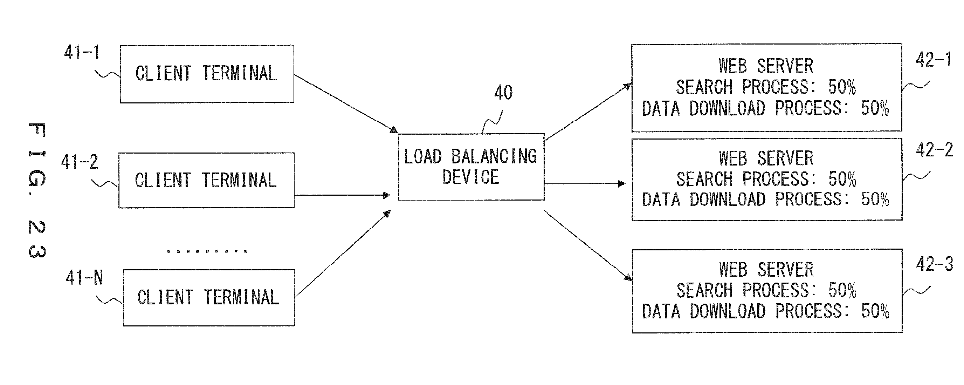

For example, FIG. 23 explains a conventional load balancing method. A load balancing device 40 is provided between a plurality of client terminals 41-1 through 41-N and web servers 42-1 through 42-3, and the client terminals 41-1 through 41-N transmit authentication requests to the load balancing device 40. When the load balancing device 40 has received authentication requests from the client terminals 41-1 through 41-N, the load balancing device 40 performs the following load balancing processes, and makes selected web servers 42-1 through 42-3 perform the authentication process.

The web servers 42-1 through 42-3 are executing search processes, which use less data and impose lighter loads, and data download processes, which use more data and impose heavier loads. The load balancing device 40 allocates process requests in such a manner that data download processes do not concentrate on a particular web server. For example, the load balancing device 40 allocates the authentication requests from the client terminals 41-1 through 41-N to the web servers 42-1 through 42-3 in such a manner that the ratio between search processes and data download processes is 1:1.

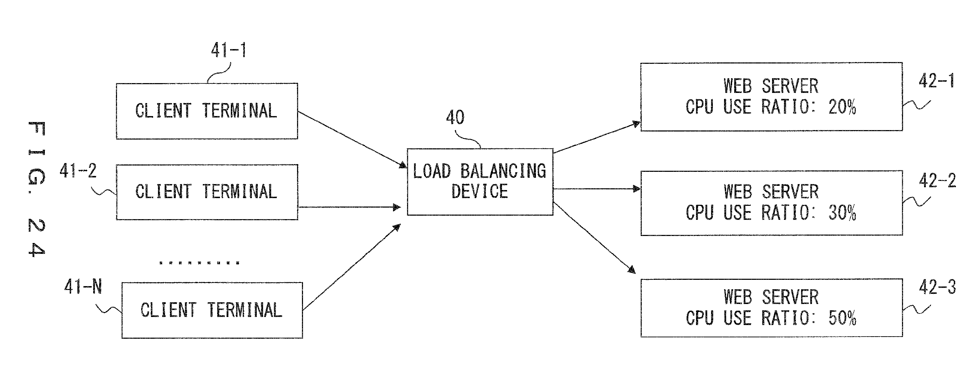

Similarly to the system illustrated in FIG. 23, the example of the biometric authentication system illustrated in FIG. 24 employs a configuration in which the load balancing device 40 is provided between the plurality of client terminals 41-1 through 41-N and the web servers 42-1 through 42-3 so that the load balancing device 40 receives authentication requests from the client terminals 41-1 through 41-N. However, the biometric authentication system illustrated in FIG. 24 employs a method in which authentication requests from the client terminals 41-1 through 41-N are allocated in accordance with the processing states of the web servers 42-1 through 42-3. For example, the use ratio of the CPU of each of the web servers 42-1 through 42-3 is determined so that authentication requests are allocated prior to web servers with low use ratios.

As an authentication method of a load balancing authentication server, Patent Document 1 discloses an invention intended to reduce an authentication time by directly transmitting an authentication request to a specified load balancing authentication server. According to this invention, a main authentication server used for management is specified from among a plurality of authentication servers, and the main authentication server transmits an authentication request directly to the specified authentication server in accordance with a user list signal transmitted from another authentication server so as to reduce an authentication time.

Patent Document 1: Japanese Laid-open Patent Publication No. 10-307798

### Disclosure of the Invention

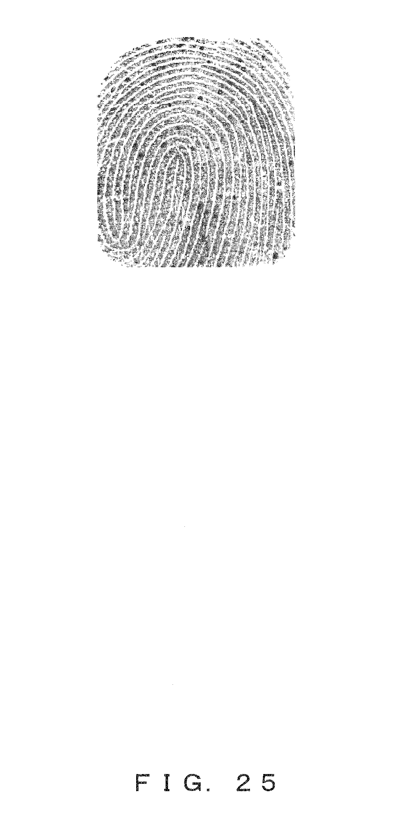

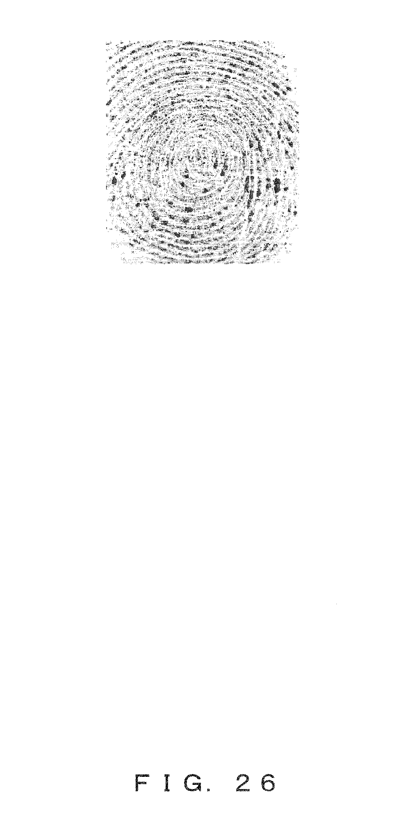

However, when a biometric authentication process is performed, authentication data transmitted from the client terminals 41-1 through 41-N is not always of a high quality. High quality fingerprint data, which expresses ridge lines and valley lines clearly as illustrated in, for example, FIG. 25, is input in some cases, while in other cases low quality fingerprint data, failing to express ridge lines and valley lines clearly as illustrated in, for example, FIG. 26, is input. In such a case, the process amount increases, requiring more time to complete authentication processes. Accordingly, when authentication requests of low quality data used for authentication concentrate on a particular authentication server, the performance of the entire system in executing authentication processing deteriorates.

Also, when low-quality fingerprint data is input, process amounts cannot be averaged over respective web servers. Authentication processes are performed by comparing registration data that has been registered in advance and input authentication data. However, in the above the process amount cannot be estimated in advance, making it impossible to perform a highly efficient load balancing process based on the averaging of the process amount.

The above problem can be solved by providing a load balancing device that allocates, to one of a plurality of authentication servers, biometric authentication requests of users received from client terminals by comparing input biometric authentication data and registration target biometric authentication data so as to estimate a check process time, including storing a process time for an authentication request being processed for each of the authentication servers, and allocating a process for a biometric authentication request from the client terminal to an authentication server having a short process time by estimating a check process time on the basis of a quality of the input biometric data and a quality of registration target biometric data and referring to the process time stored in the storage unit for each authentication server when the biometric authentication request has been received from the client terminal.

Even when input biometric data is of low quality, data of an estimated check target process time is obtained on the basis of a combination of the quality of registration target biometric data that has been registered in advance and the input biometric data, and the authentication process is allocated to the authentication server that yields the shortest process time among the authentication servers, and thereby highly efficient load balancing can be performed.

Also, by estimating a checking algorithm on the basis of the quality of input biometric data and the quality of registration target biometric data and by determining the allocation destination authentication server, more highly efficient load balancing can be achieved.

Also, by using quality information of input biometric data transmitted from client terminals so as to select an allocation destination authentication server, it is possible to perform a load balancing process that has suppressed efficiency degradation without imposing uneven loads on authentication servers.

Further, when authentication requests are transmitted from client terminals, the load balancing device according to the present invention automatically determines an allocation destination authentication server, making it possible to perform a load balancing process without requiring labor by system administrators.

### Brief Description of the Drawings

FIG. 1 explains configurations of respective units of a biometric authentication system;
FIG. 2 is a system configuration diagram illustrating a biometric authentication system according to the present embodiment;
FIG. 3 explains a method of calculating the quality of input biometric data;
FIG. 4 illustrates a configuration of a data format generated by an authentication server information obtainment unit;
FIG. 5 illustrates a configuration of an authentication server management table;
FIG. 6 illustrates a configuration of a user management table;
FIG. 7 illustrates a configuration of an authentication request management table;
FIG. 8 illustrates a configuration of an authentication server estimated check process time management table;
FIG. 9 illustrates a configuration of a biometric data estimated check process time management table;
FIG. 10 illustrates a configuration of an authentication log;
FIG. 11 is a flowchart explaining process operations of embodiment 1;
FIG. 12 is a flowchart explaining process operations of embodiment 2;
FIG. 13 is a flowchart explaining process operations of a variation of embodiment 2;
FIG. 14 illustrates a histogram of check process times;
FIG. 15 is a flowchart explaining process operations of an allocation destination determination process of embodiment 3;
FIG. 16 illustrates an example of an estimated check process algorithm management table;
FIG. 17 illustrates an example of a check algorithm weight coefficient management table;
FIG. 18 illustrates an example of an authentication server estimated check algorithm management table;
FIG. 19 is a flowchart explaining processes of embodiment 4;
FIG. 20 illustrates an example of a histogram used in embodiment 4;
FIG. 21 is a flowchart of process operations of a variation of embodiment 4;
FIG. 22 illustrates a variation example of a configuration of a load balancing device of the biometric authentication system according to the present invention;
FIG. 23 explains an example of a load balancing device of a conventional biometric authentication system;
FIG. 24 explains another example of a load balancing device of a conventional biometric authentication system;
FIG. 25 illustrates an example of high-quality fingerprint data; and
FIG. 26 illustrates an example of low-quality fingerprint data.

### Best Modes for Carrying Out the Invention

Hereinafter, the embodiments of the present invention will be explained by referring to the drawings.

### (Embodiment 1)

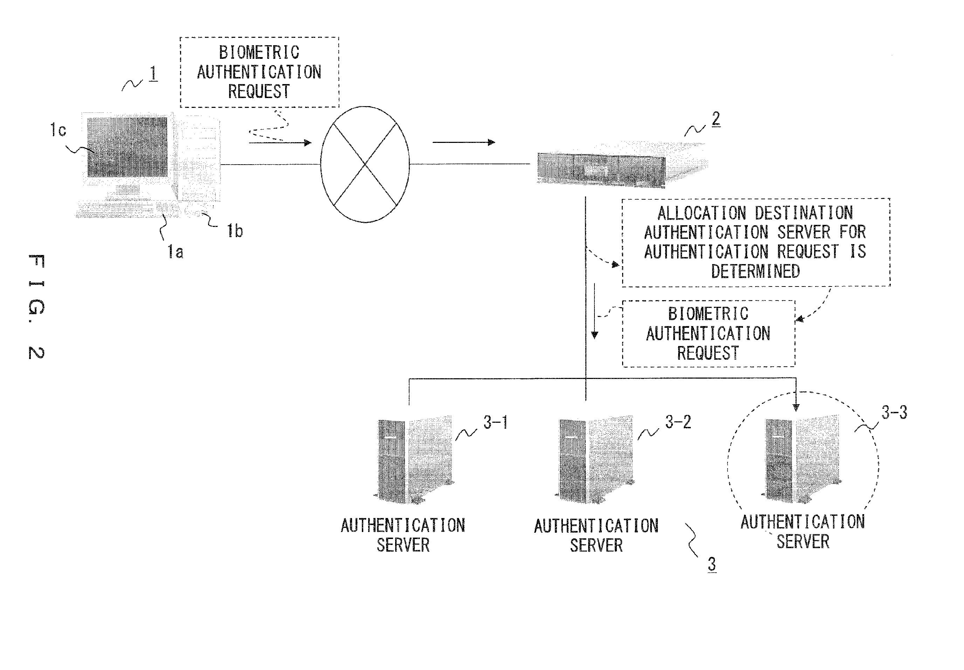

FIG. 2 is a system configuration diagram illustrating a biometric authentication system according to the present embodiment. In FIG. 2 the system includes a client terminal 1, a load balancing device 2, and authentication servers 3 (3-1 through 3-3). The client terminal 1 and the load balancing device 2 are connected via a network such as a LAN (Local Area Network) or the like, and the client terminal 1 transmits authentication requests to the load balancing device 2. The load balancing device 2 performs load balancing processes, which will be explained later, determines an allocation destination for the authentication request, and issues a biometric authentication request to the authentication server 3 that has been determined as the allocation destination. Note that the client terminal 1 illustrated in FIG. 2 is representative of a plurality of client terminals connected to the network, and authentication requests from (a plurality of) client terminals 1 are identified by user IDs such as User 0001, User0002, User0003, and the like in subsequent processes.

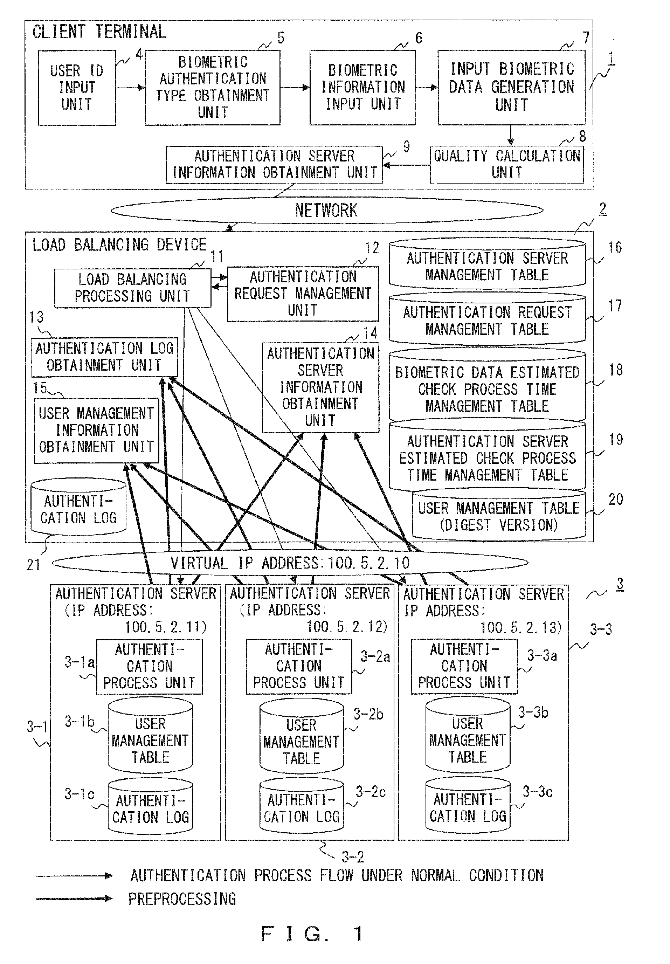

FIG. 1 explains configurations of respective units of the above biometric authentication system. The client terminal 1 includes a user ID input unit 4, a biometric authentication type obtainment unit 5, a biometric information input unit 6, a input biometric data generation unit 7, a quality calculation unit 8, and an authentication server information obtainment unit 9. The user ID input unit 4 is, for example, a keyboard 1a or a mouse 1b (see FIG. 2) connected to the client terminal 1, and is used by users for inputting ID numbers for authentication. The biometric authentication type obtainment unit 5 obtains biometric authentication information such as fingerprints, palm veins, or the like, the type of which is set beforehand by the application, and displays the obtained type on a display 1c of the client terminal 1.

Biometric information corresponding to the biometric authentication type obtained by the biometric authentication type obtainment unit 5 is input to the biometric information input unit 6. For example, biometric information such as a fingerprint, a palm vein, or the like of a user is input, and the input biometric data generation unit 7 generates input biometric data from the input information. When, for example, fingerprint information of a user is input from the biometric information input unit 6, the input biometric data generation unit 7 generates input fingerprint data on the basis of the fingerprint information.

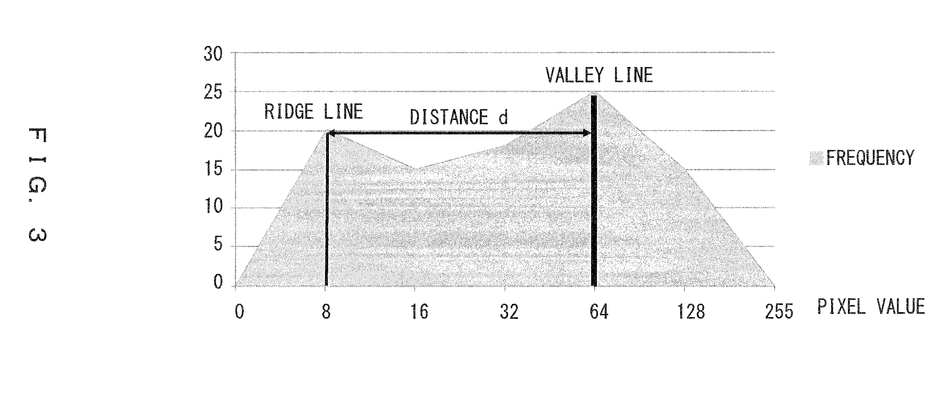

The quality calculation unit 8 calculates the quality of input biometric data generated by the input biometric data generation unit 7. FIG. 3 explains a method of calculating the quality of input biometric data. The example illustrated in FIG. 3 calculates a histogram of pixel values, and determines the quality of the input biometric data on the basis of distance (d) between two peaks. The two peak values illustrated in FIG. 3 represent the frequencies of ridge lines and valley lines of a fingerprint. When distance (d) between the peaks is long, ridge lines and valley lines of a fingerprint are expressed clearly, and the data is regarded as high-quality biometric authentication data, which is suitable biometric authentication. When distance (d) between the peaks is short, ridge lines and valley lines are not expressed clearly, and such data is regarded as low-quality biometric authentication data.

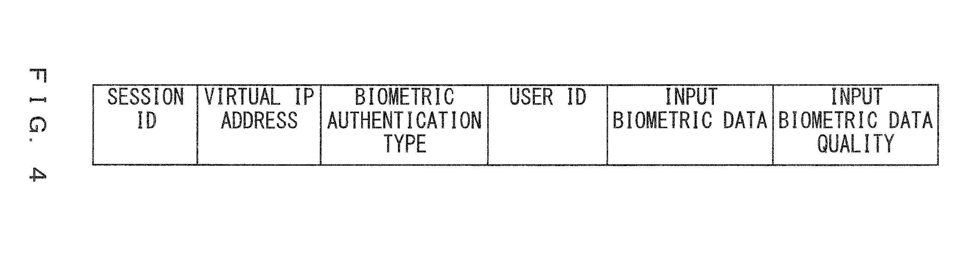

The authentication server information obtainment unit 9 obtains authentication server information such as a virtual IP address of the authentication server, and generates a data format including user information in accordance with the communication protocol. FIG. 4 illustrates an example of a data format generated by the authentication server information obtainment unit 9. User information includes, in accordance with a session ID, description portions for a virtual IP address, biometric authentication type, user ID, input biometric data, and input biometric data quality.

The above virtual IP address is an address for receiving packets directed to a virtual IP address by associating a plurality of LAN adapters with one IP address. In this example, a virtual IP address is given to the plurality of authentication servers 3 (3-1 through 3-3) for which load balancing is performed, and thereby the load balancing device 2 can receive communications from the client terminal 1 to the authentication servers 3. Also, the data of biometric authentication type of the format illustrated in FIG. 4 is data obtained by the biometric authentication type obtainment unit 5, the user ID is data input through the user ID input unit 4, input biometric data is data generated by the input biometric data generation unit 7, and input biometric data quality is quality data calculated by the quality calculation unit 8. Data quality is represented in a form of values such as "10", "9", "8", etc.

The load balancing device 2 includes a load balancing processing unit 11, an authentication request management unit 12, an authentication log obtainment unit 13, an authentication server information obtainment unit 14, and a user management information obtainment unit 15. The processes by these units are performed by referring to an authentication server management table 16, an authentication request management table 17, a biometric data estimated check process time management table 18, an authentication server estimated check process time management table 19, and a user management table 20. Note that the user management table 20 is a digest version of information of user management tables 3-1b through 3-3b included in the authentication servers 3-1 through 3-3, which will be described later.

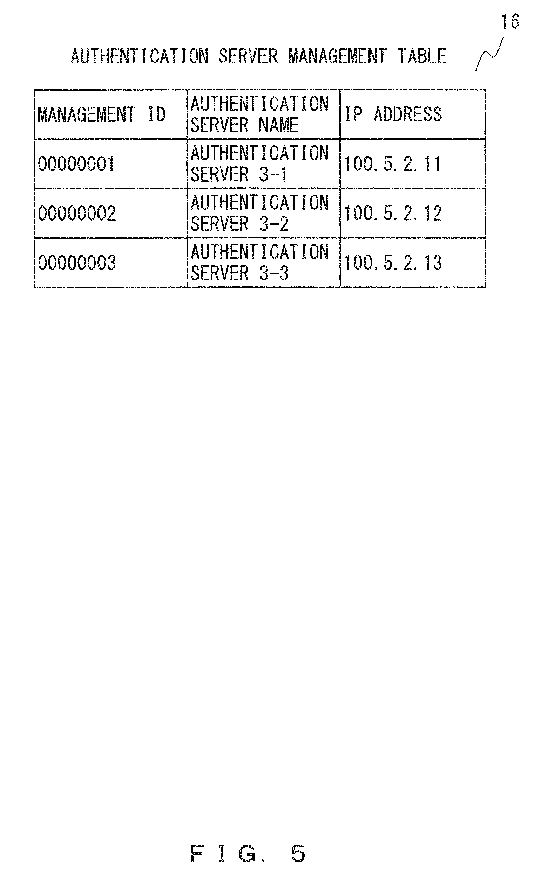

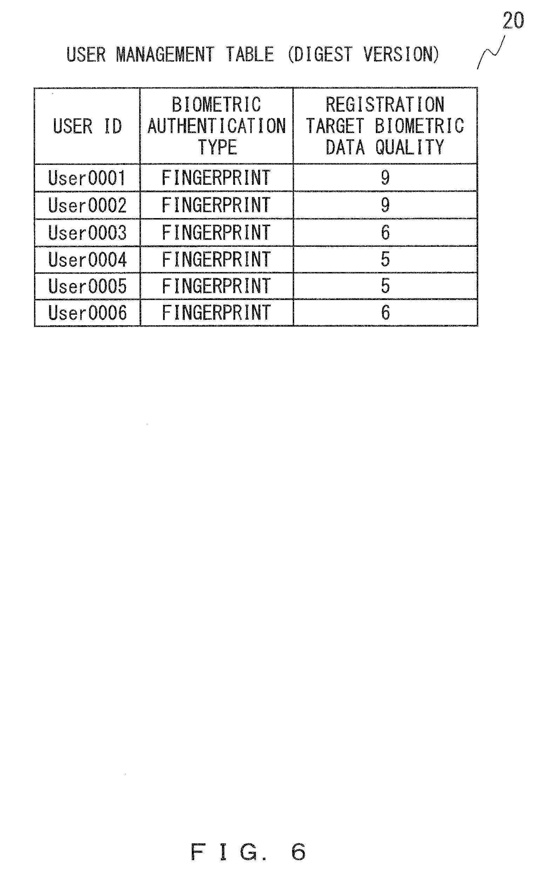

FIG. 5 illustrates a configuration of the authentication server management table 16, and this configuration has storage areas for management IDs, and names/IP addresses of allocation destination authentication servers for authentication requests received from the client terminal 1. FIG. 6 illustrates a configuration of the user management table 20, and this configuration has storage areas for user IDs, biometric authentication types, and registration target biometric data quality. The quality of fingerprint data of each user is stored as registration target biometric data quality because fingerprint data is used as biometric authentication in this example. Note that this registration target biometric data quality is data obtained from users beforehand, and it is possible to input fingerprint data for actual authorization for the purpose of registration, and this data has a similar quality to input fingerprint data, and this quality is registered in the form of values such as "9", "6", and the like.

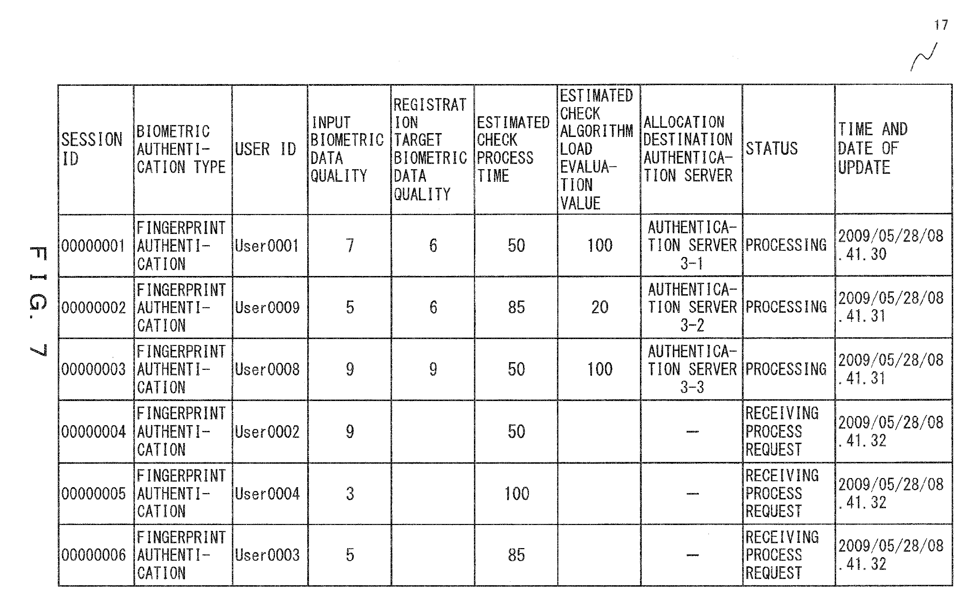

FIG. 7 illustrates a configuration of the authentication request management table 17, and this configuration stores various types of data including data of an authentication request that the load balancing device 2 received from the client terminal 1. Specifically, this table stores, in corresponding storage areas and in accordance with the session user ID, biometric authentication type, user ID, input biometric data quality, registration target biometric data quality, estimated check process time, estimation check algorithm load evaluation value, allocation destination authentication server, status, and time and date of update. Data of biometric authentication type, user ID, and input biometric data quality is data stored on the basis of data transmitted from the client terminal 1, and the registration target biometric data quality is data obtained from the user management table 20.

Estimated check process time is data of an estimated process time required for performing an authentication process, which will be described later, and an estimated check algorithm load evaluation value is used in an embodiment that will be described later. The allocation destination authentication server stores the names of authentication servers that perform authentication processes of session IDs, and a processing status of the corresponding authentication process is stored as "status". For example, when the server is processing, "processing" is stored, and when the server is receiving a process request, "receiving process request" is stored.

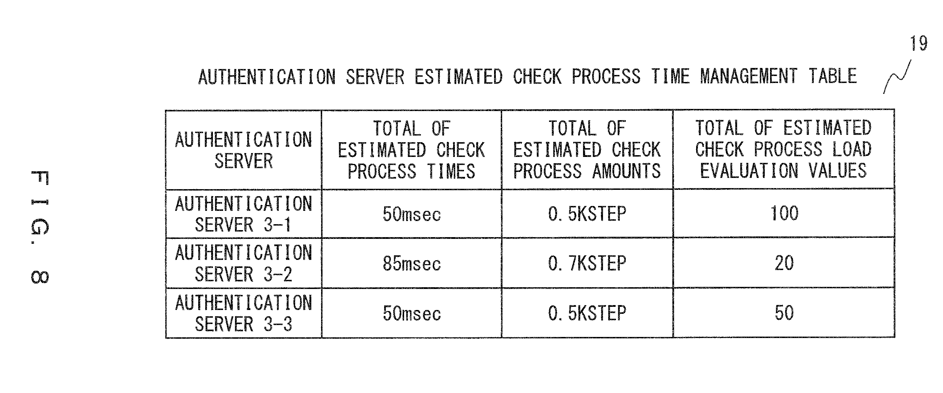

FIG. 8 illustrates a configuration of the authentication server estimated check process time management table 19, and the configuration stores total data of estimated check process time associated with input biometric data quality (for example, input fingerprint data quality) and registration target biometric data quality (registration target fingerprint data quality, for example), total data of an estimated check process amount, and total data of estimated check process load evaluation value. For example, in the case illustrated in FIG. 7, the authentication servers having "processing" status are servers 3-1 through 3-3, and the total of the estimated check process times, the total of the estimated check process amounts, and the total of the estimated check process load evaluation values of the authentication servers 3-1 through 3-3 are stored according to a process that will be described later.

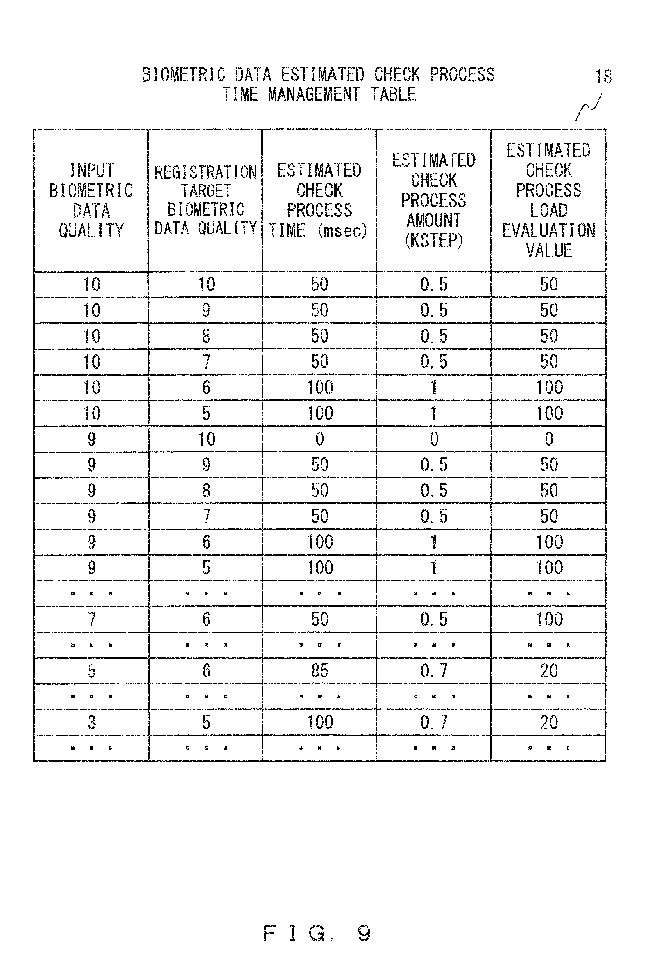

FIG. 9 illustrates a configuration of the biometric data estimated check process time management table 18. The biometric data estimated check process time management table 18 stores data of input biometric data quality, registration target biometric data quality, estimated check process time (msec), estimated check process amount (KSTEP), and estimated check process load evaluation value. For example, when input biometric data quality and registration target biometric data quality are (10,10), the estimated check process time is 50msec, and the estimated check process amount is 0.5(KSTEP), which means that the estimated check process load evaluation value is 50.

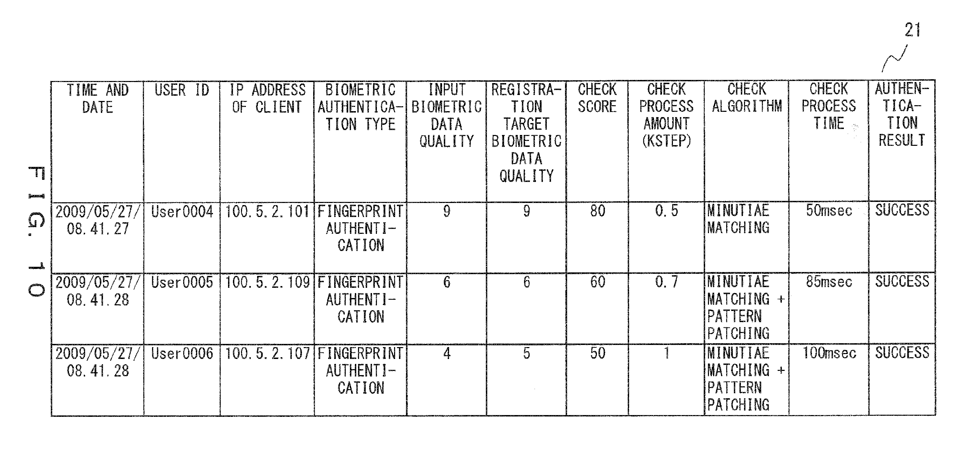

Also, FIG. 10 illustrates a configuration of an authentication log 21, and includes storage areas for user ID, IP address of client terminal, biometric authentication type, input biometric data quality, registration target biometric data quality, check score, check process amount, check algorithm, check process time, and authentication result on the basis of time and data information. Note that among the above elements, check score, check process amount, and check algorithm are used in an embodiment that will be described later.

Storing of data on the authentication server management table 16, the user management table 20, and the authentication log 21 is based on setting in a preprocess performed by the authentication log obtainment unit 13, the authentication server information obtainment unit 14, and the user management information obtainment unit 15. For example, the authentication log obtainment unit 13 periodically obtains authentication logs from the authentication servers 3-1 thorough 3-3, the authentication server information obtainment unit 14 obtains the authentication server names and IP addresses from the authentication servers 3-1 through 3-3, stores them on the authentication server management table 16, and manages the authentication server management table 16. Also, the user management information obtainment unit 15 stores data of user ID, biometric authentication type, and registration target biometric data quality on the user management table 20, and manages the user management table 20.

Also, the load balancing processing unit 11 receives from the client terminal 1 an authentication request directed to a virtual IP address, and estimates the check process time from the combination of the input fingerprint data and the registration target fingerprint data by using a process that will be described later, determines an allocation destination server, and transmits the authentication request to the authentication server. Also, the authentication request management unit 12 uses the authentication request management table 17, and manages authentication process requests received from the client terminal 1.

The authentication servers 3-1 through 3-3 are servers that execute processes of authentication requests allocated by the load balancing device 2, and include authentication process units 3-1a, 3-2a, and 3-3a, user management tables 3-1b 3-2b, and 3-3b, and authentication logs 3-1c, 3-2c, and 3-3c. The authentication process units 3-1a through 3-3a are process units for executing authentication requests transmitted from the load balancing device 2. Also, the user management tables 3-1b through 3-3b are tables that store user information related to corresponding authentication servers 3-1 through 3-3. The authentication logs 3-1c through 3-3c store authentication log information related to the corresponding authentication servers 3-1 through 3-3.

Hereinafter, process operations in the above configuration according to the present embodiment will be explained.

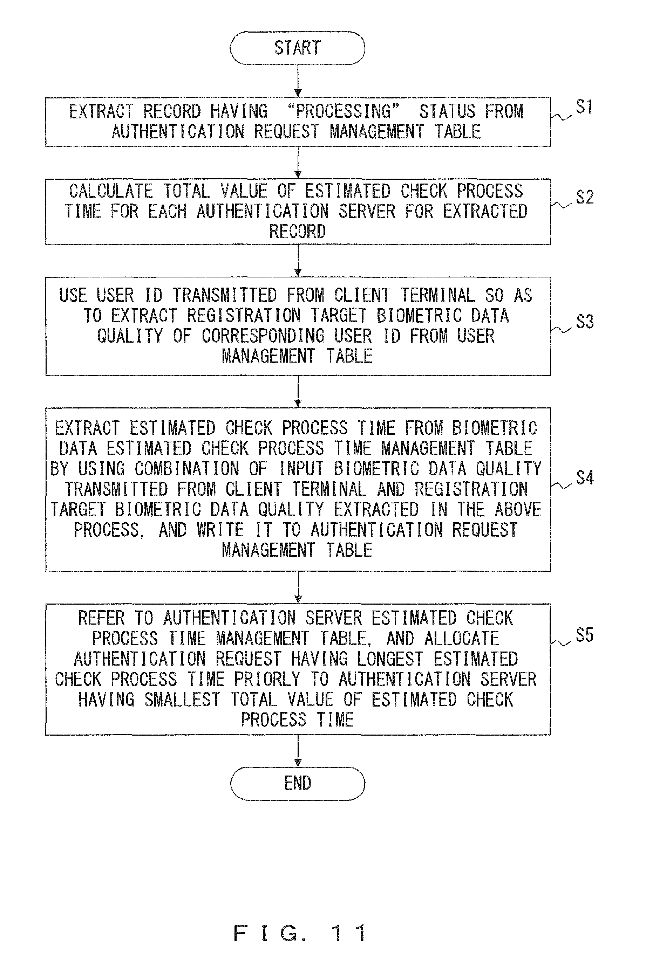

FIG. 11 is a flowchart explaining process operations according to the present embodiment. This process allocates to the authentication servers 3 authentication requests transmitted from the client terminal 1.

First, when authentication requests are received from the client terminal 1, the load balancing processing unit 11 extracts a record having "processing" status from the authentication request management table 17 illustrated in FIG. 7 (step 1; hereinafter referred to as "S"). Specifically, when the load balancing processing unit 11 (the load balancing device 2) has received an authentication request including the above described input biometric data from the client terminal 1, the load balancing processing unit 11 (the load balancing device 2) extracts a record having a "processing" status from the authentication request management table 17 in order to select the authentication servers 3 that execute the authentication process. For example, the session IDs having "processing" status in the example of the authentication request management table 17 illustrated in FIG. 7 are 00000001, 00000002, and 00000003, and the these records are extracted.

Next, the total value of the estimated check process time for each authentication server is calculated for the extracted record (S2). In the above example, the total value of the estimated check process time of each authentication server is as follows: 50msec for the authentication server 3-1, 85msec for the authentication server 3-2, and 50msec for the authentication server 3-3. In the example illustrated in FIG. 7, there is only one authentication process being processed for each authentication server, and the total value of the estimated check process times of the respective authentication servers corresponds to the estimated check process time illustrated in FIG. 7.

The result of the above calculation of the estimated check process times is stored on the authentication server estimated check process time management table 19 illustrated in FIG. 8. Accordingly, "50msec" is stored in the storage area for the authentication server 3-1 on the authentication server estimated check process time management table 19, "85msec" is stored in the storage area for the authentication server 3-2, and "50msec" is stored in the storage area for the authentication server 3-3.

Next, the load balancing processing unit 11 uses the information of the user ID transmitted from the client terminal 1 so as to extract the registration target biometric data quality of the corresponding user ID from the user management table 20 (S3) . In the example of the authentication request management table 17 illustrated in FIG. 7, the records having the status of "receiving process request" are information of the authentication requests transmitted from the client terminal 1. Accordingly, the authentication requests from User0002, User0004, and User0003 correspond to the records to be extracted, and the registration target biometric data quality of the corresponding users are extracted from the user management table 20 illustrated in FIG. 6. In the example illustrated in FIG. 6, the values of the registration target biometric data quality of User0002, User0004, and User0003 are "9", "5", and "6", and these pieces of data are extracted.

Next, the load balancing processing unit 11 combines the input biometric data quality transmitted from the client terminal 1 and the registration target biometric data quality extracted in the above process, extracts the data of the estimated check process time for this combination from the biometric data estimated check process time management table 18, and stores the data in the corresponding storage area on the authentication request management table 17 (S4).

In the case of User0002, for example, the combination of the input biometric data quality and the registration target biometric quality is (9,9), and "50msec" is extracted as the estimated check process time by referring to the biometric data estimated check process time management table 18. In the case of User0004 , the combination of the input biometric data quality and the registration target biometric data quality is (3,5), and "100msec" is extracted as the estimated check process time. In the case of User0003, the combination of the input biometric data quality and the registration target biometric data quality is (5,6), and "85msec" is extracted as the estimated check process time.

The data of the estimated check process time extracted in the above manner is stored in the corresponding area on the authentication request management table 17. Next, the load balancing processing unit 11 refers to the authentication server estimated check process time management table 19, and allocates the authentication request having the longest estimated check process time prior to the authentication server having the smallest value of the estimated check process time (S5). For example, on the authentication server estimated check process time management table 19 illustrated in FIG. 8, "50msec" is stored as the total data of the estimated check process times of the authentication server 3-1, which means that the authentication server 3-1 is the authentication server having the smallest total value of the estimated check process time. Accordingly, the authentication request of User0004 having the longest check process time (100msec) from among the authentication requests from User0002, User0004, and User0003 is allocated to the authentication server 3-1. Note that the total data of the estimated check process time of the authentication server 3-3 is also 50msec, and the authentication request of User0004 may be allocated to the authentication server 3-3.

Next, the load balancing processing unit 11 allocates the authentication request of the User0003, which is the second longest estimated check process time, to the authentication server having the second smallest total estimated check process time data. In this case, if the authentication request of User0004 is allocated to the authentication server 3-1, the authentication request of User0003 is allocated to the authentication server 3-3, and if the authentication request of User0004 is allocated to the authentication server 3-3, the authentication request of User0003 is allocated to the authentication server 3-1. The authentication request of User0002, which has the shortest estimated check process time, is allocated to the authentication server 3-2.

By performing the above process, it is possible to average the authentication times of authentication servers so as to perform a highly efficient load balancing process. It is also possible to avoid concentration of authentication requests with low-quality input data on a particular authentication server so as to enhance the authentication performance of the entire system.

Although embodiment 1 has employed a configuration in which data of an estimated check process time is read out from the biometric data estimated check process time management table 18 on the basis of the combination of input biometric data quality and registration target biometric data quality, a configuration of reading data of an estimated check amount may be employed. In such a case, the data of an estimated check process amount corresponding to the combination of input biometric data quality and registration target biometric data quality is extracted.

In the above example for instance, the combination of the input biometric data quality and the registration target biometric data quality is (9,9) for User0002, and "0.5KSTEP" is extracted from the biometric data estimated check process time management table 18 as the data of the estimated check process amount. The combination of the input biometric data quality and the registration target biometric data quality is (3, 5) for User0004, and "0.7KSTEP" is extracted as the data of the estimated check process amount. The combination of the input biometric data quality and the registration target biometric data quality is (5,6) for User0003, and "0.7KSTEP" is extracted as the data of the estimated check process amount.

These pieces of data of the estimated check process amounts are compared with the total values of the estimated check process amounts of the respective authentication servers 3-1 through 3-3 stored on the authentication server estimated check process time management table 19, and processes are allocated prior to the authentication server 3-1 or 3-3, which has the smallest estimated check process amount for the authentication requests from User0002, User0004, and User0003.

### (Embodiment 2)

Next, embodiment 2 of the present invention will be explained. The biometric authentication system of the present embodiment has the same system configuration as that illustrated in FIG. 2, and the respective units in the load balancing device 2 also have the same configurations as those illustrated in FIG. 1.

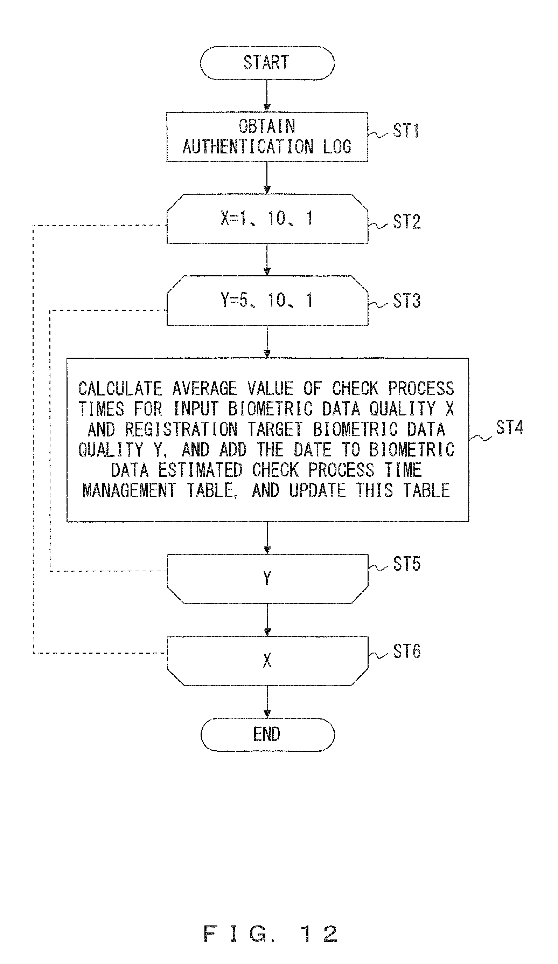

FIG. 12 is a flowchart explaining processes according to the present embodiment. The process of this flowchart is executed at constant time intervals, and an authentication log is obtained (Step 1; hereinafter step is referred to as "ST") . The input biometric data quality, the registration target biometric data quality, and the check process time for the execution of each authentication server is stored as minimum necessary data in the authentication logs 3-1c through 3-3c of the authentication servers 3-1 through 3-3. Authentication logs are obtained from the authentication servers 3-1 through 3-3, and the following processes are performed.

First, it is assumed that the input biometric data quality is X and that the input biometric data quality X is counted sequentially from 1 to 10, and "1" is set as first input biometric data quality X (ST2). Next, it is assumed that the registration target biometric data quality is Y and that registration target biometric data quality Y is counted sequentially from 5 to 10. "5" is set as first registration target biometric data quality Y (ST3).

Next, the average value of the check process times for input biometric data quality X and registration target biometric data quality Y is calculated, and data is added to the biometric data estimated check process time management table 18 so as to update the table (ST4). For example, in the first process, input biometric data quality X is "1" and registration target biometric data quality Y is "5", and the average value of the check process times for the above combination is calculated from the obtained authentication logs, and thereafter data is added to the corresponding storage area on the biometric data estimated check process time management table 18 so as to update the table.

Next, the process returns to ST3 in order to update the data of registration target biometric data quality Y (ST5) , and the data of registration target biometric data quality Y is incremented by one (+1) (ST3) so as to execute process ST4. In the next process, ST4, input biometric data quality X is "1" and registration target biometric data quality Y is "6", and the average value of the check process times is calculated so as to add the data to the corresponding storage area on the biometric data estimated check process time management table 18 and update the table.

Thereafter, registration target biometric data quality Y is incremented sequentially by one (+1) so as to execute process ST4. In other words, in a situation where input biometric data quality X is set to "1", registration target biometric data quality Y is updated sequentially from "7" to "8", "9", and "10" so as to calculate the average value of the check process times, and data is added to the corresponding storage areas on the biometric data estimated check process time management table 18 so as to update the biometric data estimated check process time management table 18 (ST2 through ST5).

Thereafter, when registration target biometric data quality Y has become "10", input biometric data quality X is incremented by one (+1), and the process returns to ST2 (ST6) . Specifically, input biometric data quality X is set to "2", and the above processes are repeated. That is, input biometric data quality X is updated sequentially from "2" to "3", "4",...... and the average value of the check process times is calculated, and data is added to the corresponding storage area on the biometric data estimated check process time management table 18 so as to update the table (ST2 through ST6).

By the above processes, the average value of the check process times for each combination of input biometric data quality X (1 through 10) and registration target biometric data quality Y (5 through 10) is added to the biometric data estimated check process time management table 18, and the table is updated.

The above example is an example where the minimum value of registration target biometric data quality Y is set to be "5" by the system, and the registration of fingerprint registration data is permitted only when registration target biometric data quality Y is 5 or greater.

Also, in the above process, it is not possible to set an estimated check process time for a combination of input biometric data quality (1 through 10) and registration target biometric data quality (5 through 10) that do not exist in authentication logs.

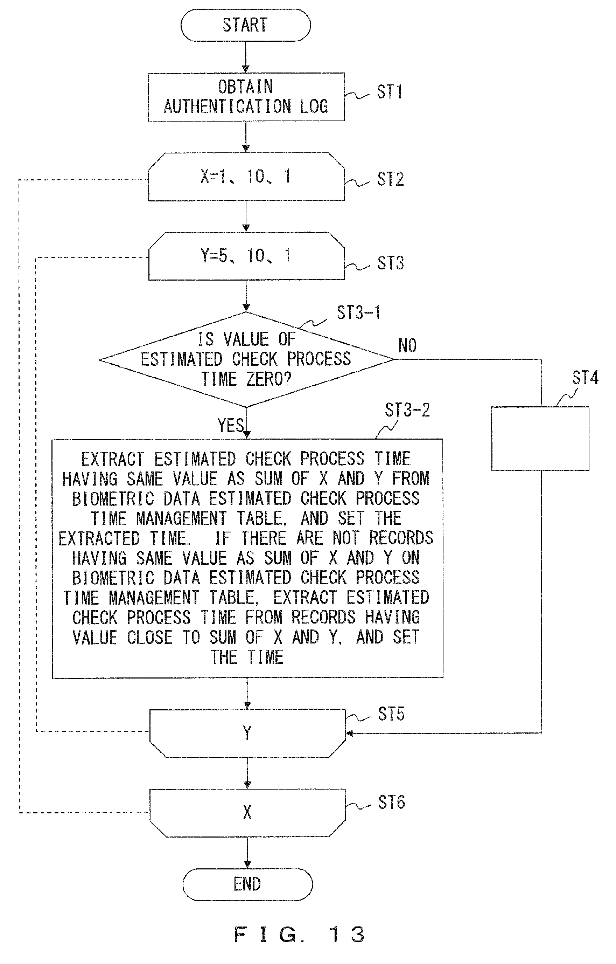

Specifically, determination (ST3-1) is added to the process illustrated in FIG. 13, and whether or not the value of the estimated check process time is "0" is determined. When the value of the estimated check process time is "0" (Yes in ST3-1), the estimated check process time having the same value as the sum of X and Y is extracted from the biometric data estimated check process time management table 18, and the extracted time is set. If there are no records having the same value as the sum of X and Y on the biometric data estimated check process time management table 18, an estimated check process time is extracted from records having a value close to the sum of X and Y, and the time is set (ST3-2).

For example, when input biometric data quality X is "6" and registration target biometric data quality Y is "9", the value of "X+Y" is "15" if there is no data of the corresponding estimated check process time in authentication logs, and the estimated check process time (for example "100" ) , having "9" as input biometric data quality X, "6" as registration target biometric data quality Y, and "15" as the total value, is used as the above estimated check process time. Also, even when there a combination of input biometric data quality and registration target biometric data quality having "15" as the total value does not exist, the data of a combination of input biometric data quality and registration target biometric data quality having "14" or "16" as the total value is extracted if such a combination exists.

By using the biometric data estimated check process time management table 18 that has been set in the above manner, the data of the estimated check process time is extracted on the basis of the combination of the input biometric data quality transmitted from the client terminal 1 and the registration target biometric data quality of the corresponding user. Then, by referring to the authentication server estimated check process time management table 19, the authentication request with the longest estimated check process time is allocated prior to the authentication server yielding the smallest total estimated check process time value.

By the above process, it is possible to obtain a more precise check process time by referring to the biometric data estimated check process time management table 18 to which average values are added and which is updated as described above, and authentication requests from the client terminal 1 can be allocated to the authentication servers 3-1 through 3-3 highly efficiently.

In the above embodiment, explanations have been given on the assumption that the average value of the estimated check process times for a combination of input biometric data quality X and registration target biometric data quality Y is stored on the biometric data estimated check process time management table 18, and the estimated check process time is obtained from the combination of input biometric data quality X and registration target biometric data quality Y. However, it is also possible to calculate the frequency of the check process times for each combination of input biometric data and registration target biometric data from authentication logs, set a highly frequent estimated check process time on the biometric data estimated check process time management table 18, and obtain an estimated check process time.

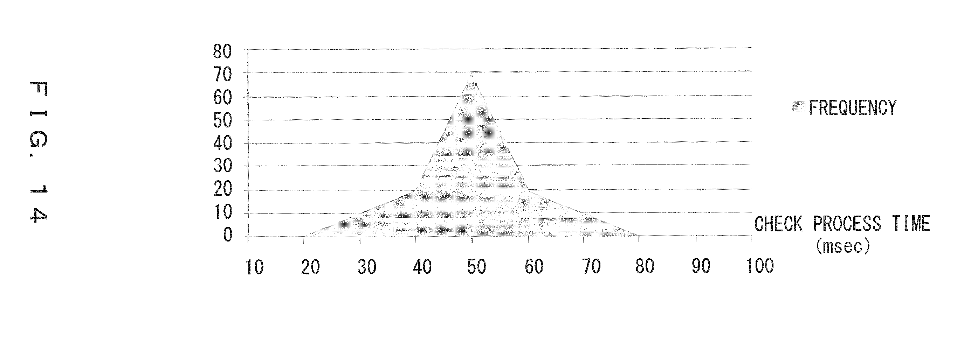

For example, as illustrated in FIG. 14, a histogram of check process times for input biometric data quality and registration target biometric data quality on the basis of authentication logs, and the most frequent check process time is stored on the biometric data estimated check process time management table 18. Specifically, when input biometric data quality is "9" and the registration target biometric data quality is "9", the check process time for the combination of input biometric data quality "9" and registration target biometric data quality "9" is estimated to be the highest frequency, 50msec, and the value is written to the corresponding storage area on the biometric data estimated check process time management table 18.

This configuration makes it possible to estimate a check process time on the basis of frequencies, and to estimate a more precise check process time even when there are variations over check process times in authentication logs.

### (Embodiment 3)

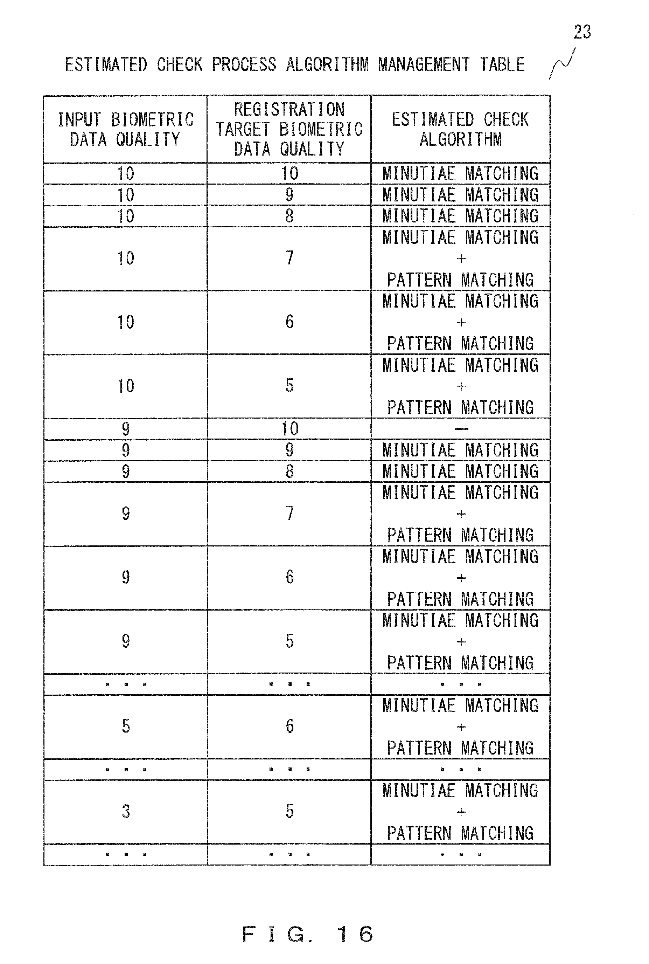

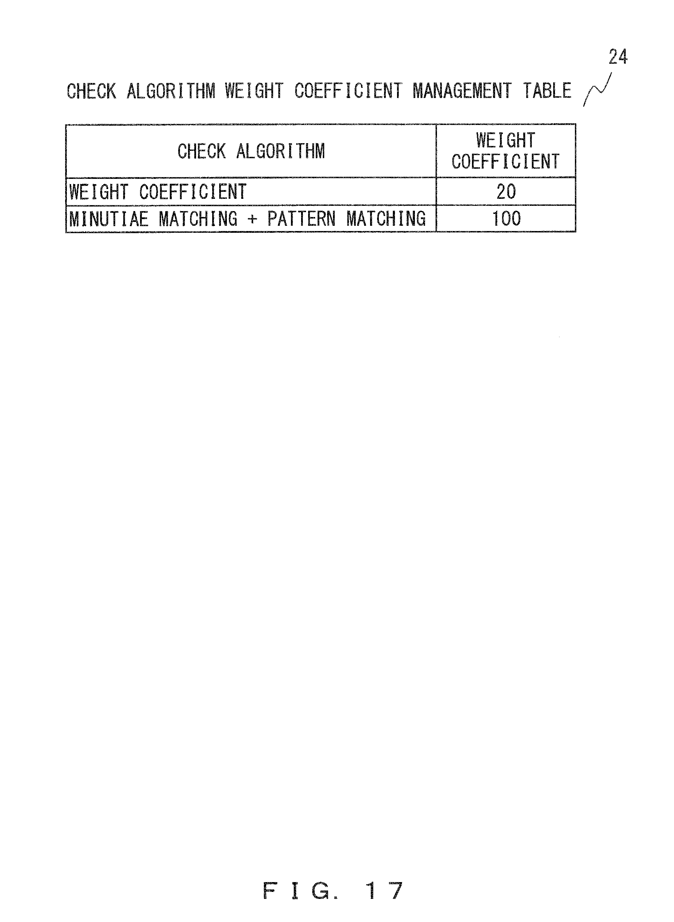

Hereinafter, embodiment 3 of the present invention will be explained. While the biometric authentication system according to the present embodiment has the same system configuration as that in FIG. 2, the load balancing device 2 has a different configuration. The present embodiment has, in addition to the configuration in FIG. 1, an estimated check process algorithm management table 23 illustrated in FIG. 16, a check algorithm weight coefficient management table 24 illustrated in FIG. 17, and an authentication server estimated check algorithm management table 25 included in the load balancing device 2.

The present embodiment employs a configuration in which a check algorithm is estimated for an authentication request being processed by an authentication server so as to evaluate the load, and when an authentication request has been received from the client terminal 1, the corresponding check algorithm is estimated on the basis of the input biometric data quality and the registration target biometric data quality in order to determine an allocation destination authentication server.

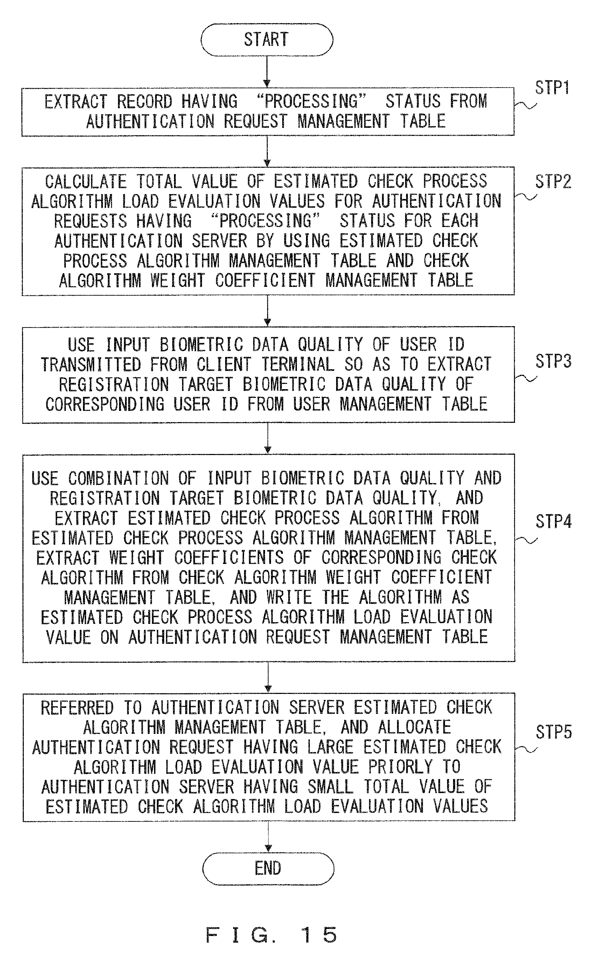

FIG. 15 is a flowchart explaining process operations of the present embodiment. Note that "Estimation of check algorithm" is an estimation of what algorithms are used for giving an authentication result when a combination of a plurality of algorithms is used for performing a check process. For example, in fingerprint authentication, a check process is performed first by using minutiae matching, in which the shape and position information of characteristic points are used, and when the authentication process has failed, pattern matching is performed, in which the shape of the next fingerprint is used. In such a case, "estimation of check algorithm" means completion of a check process based on minutiae matching, or completion of a check process based on "minutiae matching + pattern matching".

In the flowchart illustrated in FIG. 15, when the load balancing processing unit 11 has received a biometric authentication request from the client terminal 1, the load balancing processing unit 11 extracts a record having a "processing" status from the authentication request management table 17 (Step 1; hereinafter each step is referred to as "STP") . Similarly to the above process, when an authentication request including input biometric data quality has been received from the client terminal 1, this process extracts a record having a "processing" status from the authentication request management table 17. In this case, similarly to the above case, the records having the session IDs 00000001, 00000002, and 00000003, which have a "processing" status, are extracted.

Next, the total value of the estimated check process algorithm load evaluation values is calculated for each authentication server (STP2) . In other words, the total value of the estimated check process algorithm load evaluation values is calculated for each authentication server by using the estimated check process algorithm management table 23 and the check algorithm weight coefficient management table 24. Then, the calculated total value of the estimated check algorithm load evaluation values is stored on the authentication server estimated check algorithm management table 25.

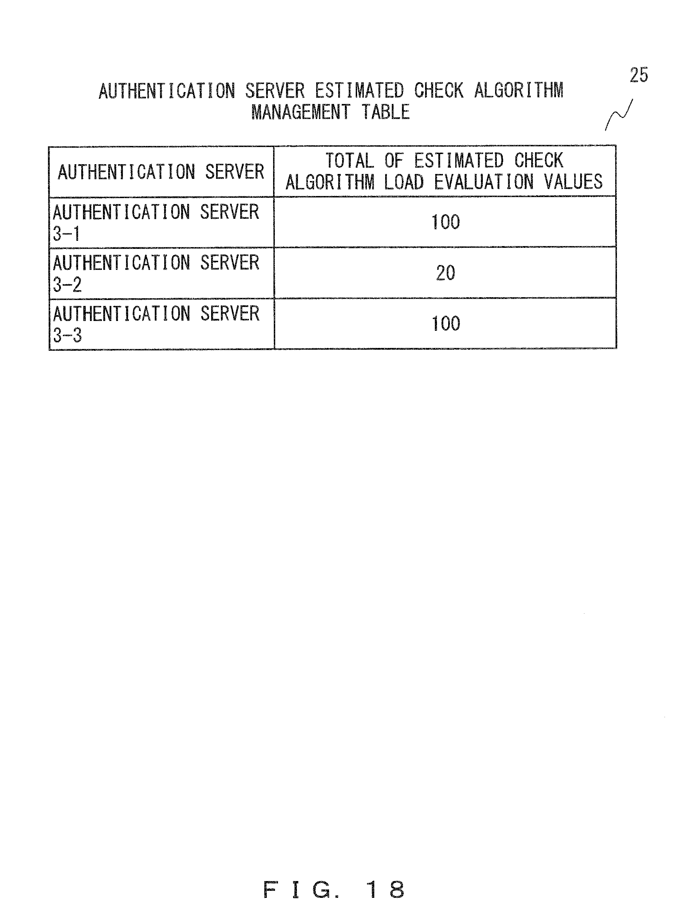

In the example illustrated in FIG. 18, the total values of the estimated check process algorithm are "100", "20", and "100" for the authentication server 3-1, the authentication server 3-2, and the authentication server 3-3, respectively.

Next, the input biometric data quality of the user ID transmitted from the client terminal 1 is used so as to extract the registration target biometric data quality of the corresponding user ID from the user management table 20 (STP3) . In the above example of the authentication request management table 17 illustrated in FIG. 7, the records having "receiving process request" status are User0002, User0004, and User0003, and the values of registration target biometric data quality are extracted from the user management table 20. In the example illustrated in FIG. 6, "9", "5", and "6" are extracted as the values of the registration target biometric data quality.

Next, a combination of the input biometric data quality transmitted from the client terminal 1 and the registration target biometric data quality extracted in the above process is used so as to estimate the check process algorithm on the estimated check process algorithm management table 23 illustrated in FIG. 16 (first half in STP4). In the case of User0002, User0004, and User0003, the combinations of the input biometric data quality and the registration target biometric data quality are (9,9), (3,5), and (5,6), respectively, and "minutiae matching", "minutiae matching + pattern matching", and "minutiae matching + pattern matching" are estimated as the estimated check algorithm from the estimated check process algorithm management table 23 illustrated in FIG. 16.

The corresponding check algorithm load is converted into a number, and the estimated check algorithm load evaluation value is extracted from the check algorithm weight coefficient management table 24 so as to write the registration target biometric data quality and the estimated check algorithm load evaluation value onto the authentication request management table (the last half of STP4). In the case of, for example, "minutiae matching", "minutiae matching + pattern matching", and "minutiae matching + pattern matching", "20", "100", and "100" are extracted as the estimated check process algorithm load evaluation values (weight coefficients) from the check algorithm weight coefficient management table 24 illustrated in FIG. 17, and the extracted data is stored in the storage area for the estimated check process algorithm load evaluation values on the authentication request management table 17.

Next, the authentication server estimated check algorithm management table 25 is referred to and the authentication request having the largest estimated check algorithm load evaluation value is allocated prior to the authentication server having the smallest total value of the estimated check algorithm load evaluation values (STP5). In the example of the authentication server estimated check algorithm management table 25 illustrated in FIG. 18, the total value of the estimated check algorithm load evaluation values of the authentication server 3-2 is the smallest, "20", and thus the authentication request of User0004 (or User0003) having the largest check algorithm load evaluation value among the authentication requests of User0002, User0004, and User0003 is allocated to the authentication server 3-2. Thereafter, similarly to the above, authentication requests having larger load evaluation values are allocated sequentially prior to authentication servers having smaller total values of the estimated check algorithm load evaluation values.

By performing the above process, it is possible to average authentication times consumed by the authentication servers, realizing a highly efficient load balancing process. It is also possible to avoid a situation where authentication requests with low-quality input data concentrate on a particular authentication server, improving the system's entire performance for executing authentication processes.

### (Embodiment 4)

Next, embodiment 4 of the present invention will be explained.

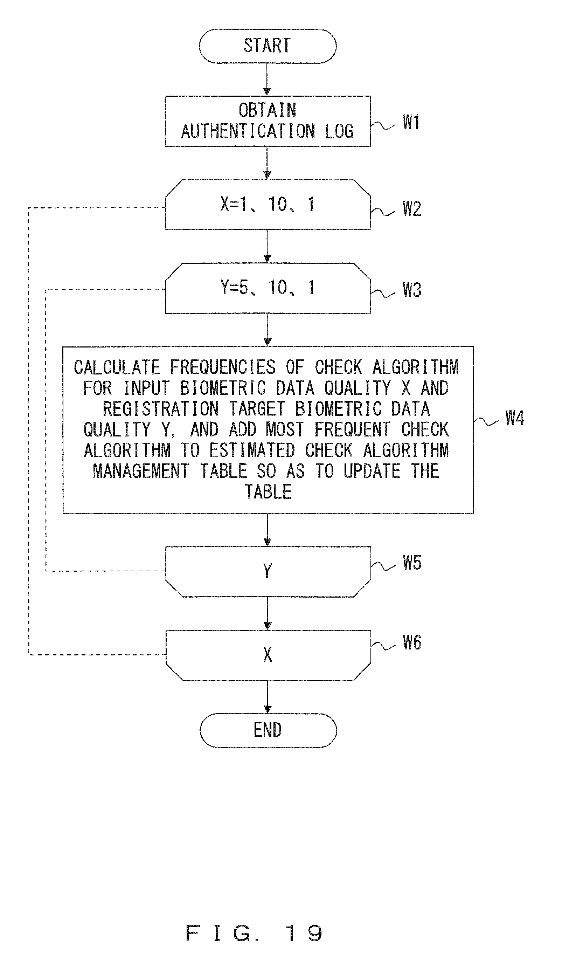

FIG. 19 is a flowchart explaining the process of the present embodiment. This process is executed at constant intervals. First, similarly to the process illustrated in FIG. 12, an authentication log is obtained (step 1; hereinafter referred to as "W"). Further, input biometric data quality is assumed to be X, and input biometric data quality X is incremented sequentially from one to ten, and "1" is set as the first input biometric data quality X (W2). Next, registration target biometric data quality is assumed to be Y, and registration target biometric data quality Y is incremented sequentially from five to ten, and "5" is set as the first registration target biometric data quality (W3).

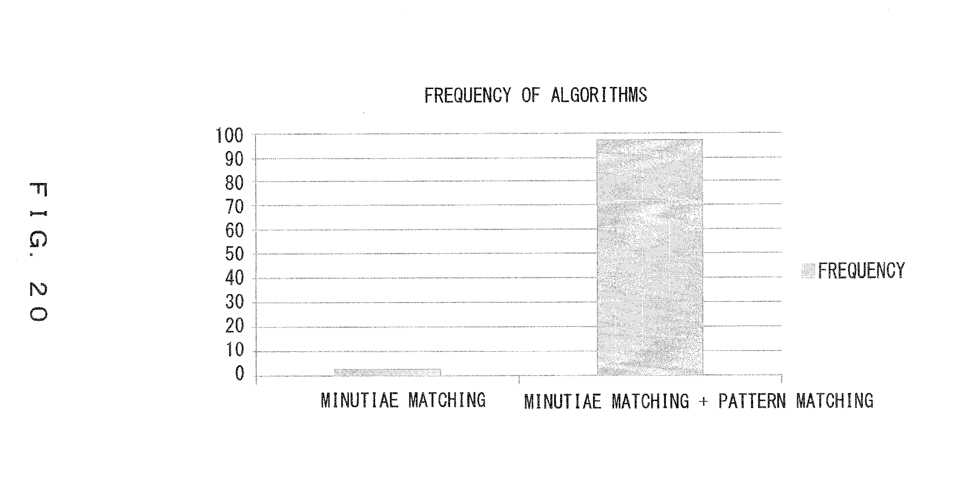

Next, the frequencies of the check algorithm are calculated for input biometric data quality X and registration target biometric data quality Y, and the most frequent check algorithm is added to update the table (W4) . For example, when the frequencies of the check algorithms are as illustrated in FIG. 20 with the input biometric data quality being "10" and the registration target biometric data quality being "7", "minutiae matching + pattern matching" is added to the corresponding area on the estimated check process algorithm management table 23, and this table is updated.

Next, the process returns to W5 in order to update the data of registration target biometric data quality Y (W3) . In other words, the data of registration target biometric data quality Y is incremented by one (+1), and the process is executed (W3 and W4). In the following process, input biometric data quality X is "1" and registration target biometric data quality Y is "6", and the frequencies of the check algorithms for input biometric data quality "1" and the registration target biometric data quality "6" are calculated so that the most frequent check algorithm is added to the estimated check algorithm management table in order to update this table (W4) .

Hereinafter, registration target biometric data quality Y is incremented sequentially by one (+1) to execute process W4, and registration target biometric data quality Y is updated sequentially from "7" to "8", "9", and "10" so as to calculate the frequencies of the check algorithms, and the most frequent check algorithm is added to the estimated check process algorithm management table 23 so as to update this table (W2 through W5).

When registration target biometric data quality Y has become "10", input biometric data quality X is incremented by one (+1), and the process returns to W2 (W6). In other words, "2" is set as input biometric data quality X, and the above process is repeated. That is, input biometric data quality X is updated sequentially from "2" to "3", "4",......, and the most frequent check algorithm is added to the estimated check process algorithm management table 23 so as to update this table (W2 through W6).

For combinations of the input biometric data quality (1 through 10) and the registration target biometric data quality (5 through 10), which are not included in authentication logs, setting is performed to indicate that there are no estimated check algorithms. In such a case, an estimated check algorithm having a closer total value between the input biometric data and the registration target biometric data is selected on the estimated check process algorithm management table 23 to be selected as the estimated check algorithm.

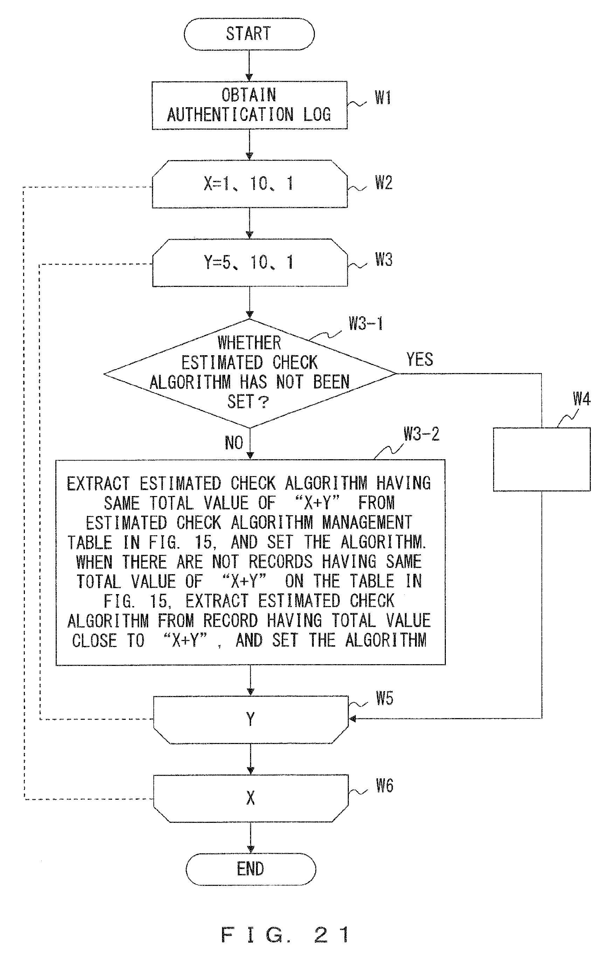

In other words, determination (W3-1) is added to the flowchart illustrated in FIG. 21 in order to determine whether an estimated check algorithm has not been set. When an estimated check algorithm has not been set (No in W3-1), an estimated check algorithm having the same total value of "X+Y" is extracted from the estimated check process algorithm management table 23, and is set. Also, when there are no records having the same total value of "X+Y" on the estimated check algorithm management table, an estimated check algorithm is extracted from a record having a similar total value of "X+Y", and is set (W3-2). By this configuration, a check process time can be estimated more reliably even when authentication logs have variations.

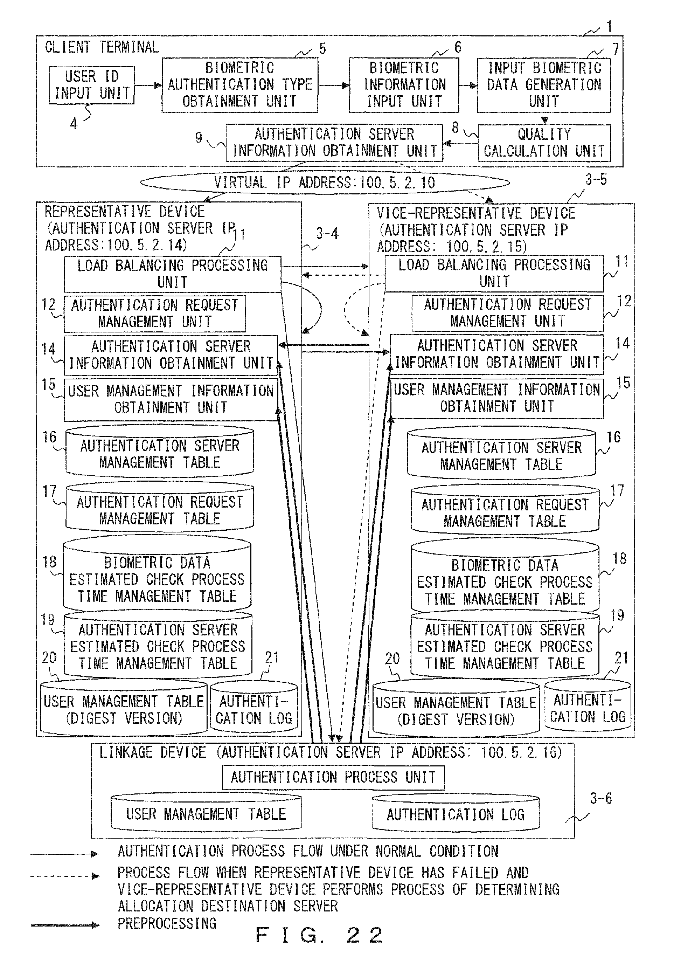

As described above, specific examples of the present invention have been explained in embodiments 1 through 4 above. However, the present invention may be implemented in various different forms in addition to the above embodiments.
For example, FIG. 22 illustrates a variation example of a load balancing device of the biometric authentication system according to the present invention, including the client terminal 1 and authentication servers 3-4 through 3-6. Similarly to the case illustrated in FIG. 1, the client terminal 1 includes the user ID input unit 4, the biometric authentication type obtainment unit 5, the biometric information input unit 6, the input biometric data generation unit 7, the quality calculation unit 8, and the authentication server information obtainment unit 9. However, the authentication servers 3-4 through 3-6 have a configuration different from that in FIG. 1, and the authentication server 3-4 is given a function of a load balancing device as a representative device. In other words, the authentication server 3-4 has the functions of the load balancing processing unit 11, the authentication request management unit 12, the authentication server information obtainment unit 14, and the user management information obtainment unit 15, and also includes the authentication server management table 16, the authentication request management table 17, the biometric data estimated check process time management table 18, the authentication server estimated check process time management table 19, the user management table 20, and the authentication log 21.

In this configuration, one of the authentication servers 3 is made to operate as a representative device, and when the representative device (authentication server 3-4) has received an authentication request from the client terminal 1, the device refers to the authentication request management table 17, determines an allocation destination authentication server, and the authentication request is transmitted. Also, in the example illustrated in FIG. 22, the authentication server 3-5 serves as a vice-representative device, and is given a function as a load balancing device so that when the representative device (authentication server 3-4) does not function, the vice-representative device (authentication server 3-5) functions so as to refer to the authentication request management table 17, determine an allocation destination authentication server, and transmits the authentication request when the authentication request has been received from the client terminal 1.

It is also possible to employ a configuration in which a deputy device that takes over the functions of the load balancing device 2 is prepared when the load balancing device 2 has failed. Also, specific implements of load balancing processes of the load balancing device 2 are not limited to the configuration illustrated in the drawings, and all or part of the load balancing processing unit 11, the authentication request management unit 12, the authentication log obtainment unit 13, the authentication server information obtainment unit 14, and the user management information obtainment unit 15 may be configured in arbitrary functional or physical units such as, for example, integrating the load balancing processing unit 11, the authentication request management unit 12, the authentication log obtainment unit 13, the authentication server information obtainment unit 14, and the user management information obtainment unit 15, or the like. Further, it is also possible to employ a configuration in which all or part of determination of allocation destination authentication servers, estimations of check process times, estimations of check algorithms, management of authentication server estimated check process times, management of authentication server estimated check algorithms, and the like are implemented in a form that programs for them are prepared in advance, are read out to memory or the like, are analyzed, and are executed by a CPU.

It is also possible to employ a configuration in which, when an authentication request has been received from a client terminal, the check process load evaluation value is calculated/estimated by using a unique load evaluation method on the basis of the input biometric data quality and the registration target biometric data quality so that the calculated/estimated value is compared with the total of the estimated check process load evaluation value related to authentication requests being processed by the respective servers 3 in order to determine an allocation destination for the authentication request.

It is also possible to employ a configuration in which input biometric data quality, registration target biometric data quality, and check process load evaluation value are held in authentication logs, the frequencies of the check process load evaluation values are calculated for each combination of the pieces of input biometric data quality and the pieces of registration target biometric data quality by using the authentication logs, the most frequent load evaluation value is associated with input biometric data and registration target biometric data in accordance with the frequency distribution of the check process load evaluation values, and the check process load evaluation value is estimated for each combination of the input biometric data quality and the registration target biometric data quality.

### NUMERALS

1: CLIENT TERMINAL
2: LOAD BALANCING DEVICE
3, 3-1 THROUGH 3-6: AUTHENTICATION SERVER
3-1A, 3-2A, 3-3A: AUTHENTICATION PROCESS UNIT
3-1B, 3-2B, 3-3B: USER MANAGEMENT TABLE
3-1C, 3-2C, 3-3C: AUTHENTICATION LOG
4: USER ID INPUT UNIT
5: BIOMETRIC AUTHENTICATION TYPE OBTAINMENT UNIT
6: BIOMETRIC INFORMATION INPUT UNIT
7: INPUT BIOMETRIC DATA GENERATION UNIT
8: QUALITY CALCULATION UNIT
9: AUTHENTICATION SERVER INFORMATION OBTAINMENT UNIT
11: LOAD BALANCING PROCESSING UNIT
12: AUTHENTICATION REQUEST MANAGEMENT UNIT
13: AUTHENTICATION LOG OBTAINMENT UNIT
14: AUTHENTICATION SERVER INFORMATION OBTAINMENT UNIT
15: USER MANAGEMENT INFORMATION OBTAINMENT UNIT
16: AUTHENTICATION SERVER MANAGEMENT TABLE
17: AUTHENTICATION REQUEST MANAGEMENT TABLE
18: BIOMETRIC DATA ESTIMATED CHECK PROCESS TIME MANAGEMENT TABLE
19: AUTHENTICATION SERVER ESTIMATED CHECK PROCESS TIME MANAGEMENT TABLE
20: USER MANAGEMENT TABLE
21: AUTHENTICATION LOG
23: ESTIMATED CHECK PROCESS ALGORITHM MANAGEMENT TABLE
24: CHECK ALGORITHM WEIGHT COEFFICIENT MANAGEMENT TABLE
25 : AUTHENTICATION SERVER ESTIMATED CHECK ALGORITHM MANAGEMENT TABLE

## Claims

1. A load balancing device that allocates, to one of a plurality of authentication servers, biometric authentication requests of users received from client terminals by comparing input biometric authentication data and registration target biometric authentication data so as to estimate a check process time, comprising:
a storage unit to store a process time for an authentication request being processed for each of the authentication servers; and
an allocation destination determination unit to allocate a process for a biometric authentication request from the client terminal to an authentication server having a process time that is short by estimating a check process time on the basis of a quality of the input biometric data and a quality of registration target biometric data and referring to the process time stored in the storage unit for each authentication server when the biometric authentication request has been received from the client terminal.

2. The load balancing device according to claim 1, wherein:
check process times for the quality of input biometric data and the quality of registration target biometric data are held in authentication logs, an average value of process times is calculated for each combination of the quality of input biometric data and the quality of registration target biometric data by using the authentication log, and the average value is estimated to be the check process time, in the estimation of the check process time based on a combination of the quality of input biometric data and the quality of registration target biometric data.

3. The load balancing device according to claim 1, wherein:
check process times for the quality of input biometric data and the quality of registration target biometric data are held in authentication logs, a frequency distribution of process times is calculated for each combination of the quality of input biometric data and the quality of registration target biometric data by using the authentication log, and a check process time is estimated on the basis of the frequency distribution of the process times, in the estimation of the check process time based on a combination of the quality of input biometric data and the quality of registration target biometric data.

4. A load balancing device that allocates, to one of a plurality of authentication servers, biometric authentication requests of users received from client terminals by comparing input biometric authentication data and registration target biometric authentication data so as to estimate a check algorithm, comprising:
a storage unit to store a process time for an authentication request being processed for each of the authentication servers; and
an allocation destination determination unit to allocate a process for a biometric authentication request from the client terminal to an authentication server having a process time that is short by estimating a check algorithm on the basis of the quality of the input biometric data and the quality of registration target biometric data and referring to the process time stored in the storage unit for each authentication server when the biometric authentication request has been received from the client terminal.

5. The load balancing device according to claim 4, wherein:
information of check algorithms for the quality of input biometric data and the quality of registration target biometric data is held in authentication logs, a check algorithm for a combination of the quality of input biometric data and the quality of registration target biometric data is estimated by using the authentication log, in the estimation of the check algorithm based on a combination of the quality of input biometric data and the quality of registration target biometric data.

6. A load balancing method for allocating, to one of a plurality of authentication servers, biometric authentication requests of users received from client terminals by comparing input biometric authentication data and registration target biometric authentication data so as to estimate a check process time, comprising:
a process of storing, in a storage unit, a process time for an authentication request being processed for each of the authentication servers; and
a process of allocating a process for a biometric authentication request from the client terminal to an authentication server having a process time that is short by estimating a check process time on the basis of a quality of the input biometric data and a quality of registration target biometric data and referring to the process time stored in the storage unit for each authentication server when the biometric authentication request has been received from the client terminal.

7. The load balancing method according to claim 6, wherein:
check process times for the quality of input biometric data and the quality of registration target biometric data are held in authentication logs, an average value of process times is calculated for each combination of the quality of input biometric data and the quality of registration target biometric data by using the authentication log, and the average value is estimated to be the check process time, in the estimation of the check process time based on a combination of the quality of input biometric data and the quality of registration target biometric data.

8. The load balancing method according to claim 6, wherein:
check process times for the quality of input biometric data and the quality of registration target biometric data are held in authentication logs, a frequency distribution of process times is calculated for each combination of the quality of input biometric data and the quality of registration target biometric data by using the authentication log, and a check process time is estimated on the basis of the frequency distribution of the process times, in the estimation of the check process time based on a combination of the quality of input biometric data and the quality of registration target biometric data.

9. A load balancing method for allocating, to one of a plurality of authentication servers, biometric authentication requests of users received from client terminals by comparing input biometric authentication data and registration target biometric authentication data so as to estimate a check algorithm, comprising:
a process of storing, in a storage unit, a process time for an authentication request being processed for each of the authentication servers; and
a process of allocating a process for a biometric authentication request from the client terminal to an authentication server having a process time that is short by estimating a check algorithm on the basis of a quality of the input biometric data and a quality of registration target biometric data and referring to the process time stored in the storage unit for each authentication server when the biometric authentication request has been received from the client terminal.

10. The load balancing method according to claim 9, wherein:
information of check algorithms for the quality of input biometric data and the quality of registration target biometric data is held in authentication logs, a check algorithm for a combination of the quality of input biometric data and the quality of registration target biometric data is estimated by using the authentication log, in the estimation of the check algorithm based on a combination of the quality of input biometric data and the quality of registration target biometric data.

11. A load balancing device that allocates, to one of a plurality of authentication servers, biometric authentication requests of users received from client terminals by comparing input biometric authentication data and registration target biometric authentication data so as to estimate a check process amount, comprising:
a storage unit to store a process amount for an authentication request being processed for each of the authentication servers; and
an allocation destination determination unit to allocate a process for a biometric authentication request from the client terminal to an authentication server having a process time that is short by estimating a check process amount on the basis of a quality of the input biometric data and a quality of registration target biometric data and referring to the process amount stored in the storage unit for each authentication server when the biometric authentication request has been received from the client terminal.

12. The load balancing device according to claim 11, wherein:
A check process amount for the quality of input biometric data and the quality of registration target biometric data is held in authentication logs, a frequency distribution of process amounts is calculated for each combination of the quality of input biometric data and the quality of registration target biometric data by using the authentication log, and a check process amount is estimated on the basis of the frequency distribution of the process amounts, in the estimation of the check process amount based on a combination of the quality of input biometric data and the quality of registration target biometric data performed by the allocation destination determination unit.

13. A load balancing method for allocating, to one of a plurality of authentication servers, biometric authentication requests of users received from client terminals by comparing input biometric authentication data and registration target biometric authentication data so as to estimate a check process amount, comprising:
a process of storing, in a storage unit, a process amount for an authentication request being processed for each of the authentication servers; and
a process of allocating a process for a biometric authentication request from the client terminal to an authentication server having a process time that is short by estimating a check process amount on the basis of a quality of the input biometric data and a quality of registration target biometric data and referring to the process amount stored in the storage unit for each authentication server when the biometric authentication request has been received from the client terminal.

14. The load balancing method according to claim 13, wherein:
a check process amount for the quality of input biometric data and the quality of registration target biometric data is held in authentication logs, a frequency distribution of process amounts is calculated for each combination of the quality of input biometric data and the quality of registration target biometric data by using the authentication log, and a check process amount is estimated on the basis of the frequency distribution of the process amounts, in the estimation of the check process amount based on a combination of the quality of input biometric data and the quality of registration target biometric data.
